# DEMANDE DE BREVET EUROPEEN

(11) **EP 2 203 022 A1**
(43) Date de publication de la demande: **30.06.2010**
(21) Numéro de dépôt: 09176565.1
(22) Date de dépôt: 19.11.2009
(51) Int. Cl.: H04W 64/00, G01S 5/14, G01S 5/00, H04W 88/18

(54) **Procédé et système d'authentification d'informations de position reportées par un dispositif mobile**

(30) Priorité: 23.12.2008 FR 0807400
(71) Demandeur: Thales, 92200 Neuilly Sur Seine (FR)
(72) Inventeur: Monnerat, Michel, 31240, SAINT JEAN (FR); Buret, Hervé, 31830, PLAISANCE DU TOUCH (FR)
(74) Mandataire: Nguyen, Dominique

(57) **Abrégé**

Le procédé d'authentification et de validation d'informations de position reportées par un dispositif mobile consiste
a) à déterminer, à bord du dispositif mobile (1), la position du dispositif mobile (1) à partir de signaux de navigation GNSS émis par une constellation de satellites (5a,5b,5c) et
b) à transmettre l'information de position obtenue vers un serveur de positions (3) par l'intermédiaire d'une station de base (7a,7b,7c) d'un réseau cellulaire de communication mobile, la station de base (7a,7b,7c) ayant une zone de couverture (8a,8b,8c), appelée cellule, dans laquelle est situé le dispositif mobile (1), et
c) est caractérisé en ce qu'il consiste en outre à transmettre au serveur de positions (3), une information de position de la cellule dans laquelle se trouve la station de base (7a,7b,7c) à laquelle est connecté le dispositif mobile (1) et
d) à vérifier, dans le serveur de positions (3), que la position du dispositif mobile (1) reçue est incluse dans la cellule de la station de base correspondant à l'information de position de cellule reçue.
Application au domaine des systèmes de télépéage routier, autoroutier et urbain et à tout autre dispositif de paiement géolocalisé.

## Description

La présente invention concerne un procédé et un système d'authentification et de validation d'informations de position reportées par un dispositif mobile. Elle s'applique notamment au domaine des systèmes de télépéage routier, autoroutier et urbain et à tout autre dispositif de paiement géolocalisé.

Pour déterminer la position d'un véhicule, les dispositifs de télépéages connus utilisent soit des portiques de signalisation disposés à des endroits stratégiques sur des routes soumises à un péage, soit un dispositif de localisation embarqué sur le véhicule reportant périodiquement sa position déterminée par un système de positionnement par satellites GNSS (Global Navigation Satellite System), par exemple de type GPS (Global Positioning System) ou Galileo.

Un système de positionnement par satellites convient bien pour l'implémentation d'un télépéage à la fois routier, autoroutier et urbain mais la fiabilité de l'information de position qu'il délivre dépend uniquement d'une information transmise par un récepteur GNSS embarqué dans le véhicule et la fiabilité de la facturation réalisée par un serveur de positions dépend directement de cette information de position. Hors il existe de nombreuses sources d'erreur de positionnement pouvant entacher la validité des informations de position remontées au serveur de positions par un dispositif de localisation. Une erreur de positionnement peut être due à un problème technique sur la réception des signaux GNSS, tel que par exemple une défaillance du récepteur ou une défaillance des informations transmises par la constellation de satellites utilisée. L'erreur peut également provenir de l'utilisation délibérée d'un leurre par le propriétaire du véhicule pour reporter des informations correspondant à un lieu différent du lieu où se situe effectivement le véhicule, le leurre pouvant utiliser par exemple une programmation d'une trajectoire prédéfinie ou un générateur de faux signaux GNSS.

Une première solution connue permettant de détecter et d'éliminer une défaillance sur un ou plusieurs signaux GNSS et pour détecter une défaillance partielle du récepteur GNSS, sur un ou plusieurs canaux de réception consiste à utiliser, au sein du récepteur GNSS, un algorithme connu sous le nom de RAIM (Receiver Autonomous Integrity Monitoring).

Une deuxième solution connue consiste à analyser au niveau du serveur de positions, l'évolution des informations de position datées qui sont remontées par le dispositif de localisation. Une erreur ou défaillance est alors détectée et traitée dès lors qu'une position devient incohérente par rapport à des positions précédentes et qu'elle fait apparaître un saut géographique entre deux informations de positions successives très supérieur à la différence de position que la dynamique supposée du véhicule ne peut autoriser.

Cependant, ces deux solutions connues permettent de résoudre le problème d'intégrité due à une défaillance non intentionnelle mais elles ne permettent en aucun cas de détecter une quelconque tromperie intentionnelle.

L'invention a pour but de résoudre ces problèmes et de proposer un procédé d'authentification et de validation d'informations de position reportées par un dispositif mobile ne présentant pas les inconvénients des solutions connues et permettant de valider efficacement les informations de positions en toute circonstance, qu'elles se présentent sous la forme de coordonnées ou bien de mesures permettant d'en déduire les coordonnées du dispositif mobile.

Pour cela, l'invention concerne un procédé d'authentification et de validation d'informations de position reportées par un dispositif mobile consistant à déterminer, à bord du dispositif mobile, la position du dispositif mobile à partir de signaux de navigation GNSS émis par une constellation de satellites et à transmettre l'information de position obtenue vers un serveur de positions par l'intermédiaire d'une station de base d'un réseau cellulaire de communication mobile, la station de base ayant une zone de couverture, appelée cellule, dans laquelle est situé le dispositif mobile. Le procédé consiste en outre à transmettre au serveur de positions, une information de position de la cellule dans laquelle se trouve la station de base à laquelle est connecté le dispositif mobile, à vérifier, dans le serveur de positions, que la position du dispositif mobile reçue est incluse dans la cellule de la station de base correspondant à l'information de position de cellule reçue et suivant le résultat de la vérification, à décider si la position déterminée par le dispositif mobile à partir des signaux de navigation et transmise au serveur de positions est authentique ou s'il y a une fraude.

Avantageusement, le procédé consiste à transmettre au serveur de positions une succession d'informations de position du dispositif mobile et une succession d'informations de position des cellules dans lesquelles se trouvent les stations de base, à comparer la succession de positions du dispositif mobile à la succession de positions des cellules et à décider si la succession de positions transmises par le dispositif mobile correspond à une trajectoire authentique suivie par le dispositif mobile.

Avantageusement, l'information de position de cellule est un identifiant de la station de base transmis au serveur de positions par le dispositif mobile dans un message contenant l'information de position du mobile et l'identifiant de la station de base.

Selon une variante de l'invention, l'information de position de cellule de la station de base est transmise au serveur de positions par un noeud de positionnement du réseau cellulaire en réponse à une interrogation du serveur de position après réception du message contenant l'information de position du dispositif mobile transmise par le dispositif mobile. L'information de position de cellule de la station de base peut-être un identifiant de la station de base ou une zone géographique obtenue par traitement de mesures de puissance en réception par un émetteur-récepteur de communication mobile placé à bord du dispositif mobile ou une zone géographique correspondant à la zone de couverture de la station de base.

L'invention concerne aussi un système d'authentification et de validation d'informations de position reportées par un dispositif mobile, comportant :
- à bord du dispositif mobile, un dispositif de localisation et de diffusion pour élaborer et envoyer un message contenant une information de position du dispositif mobile,
- un réseau de communication cellulaire comportant au moins une station de base ayant une zone géographique de couverture, appelée cellule pour transmettre le message contenant l'information de position du dispositif mobile,
- un serveur de positions connecté au réseau cellulaire pour recevoir et traiter le message contenant l'information de position du dispositif mobile,
le réseau de communication cellulaire comporte en outre des moyens de localisation de la cellule de la station de base dans laquelle est situé le mobile pour délivrer et transmettre une information de position de ladite cellule au serveur de positions,
le serveur de positions comporte des moyens de vérification pour vérifier que la position du mobile reçue est incluse dans la cellule de la station de base correspondant à l'information de position de cellule reçue et suivant le résultat de la vérification, pour décider si la position déterminée par le dispositif mobile à partir des signaux de navigation et transmise au serveur de positions est authentique ou s'il y a une fraude.

Avantageusement, le dispositif de localisation et de diffusion comporte un récepteur de signaux de navigation GNSS pour déterminer la position du dispositif mobile à partir de signaux de navigation émis par une constellation de satellites, connecté à un émetteur-récepteur de communication cellulaire pour envoyer le message contenant la position du dispositif mobile au serveur de positions.

Avantageusement, les moyens de localisation de la cellule de la station de base dans laquelle est situé le dispositif mobile comportent un identifiant de la station de base transmis au serveur de positions par l'émetteur-récepteur de communication cellulaire avec le message contenant l'information de position du dispositif mobile.

Alternativement, les moyens de localisation de la cellule de la station de base dans laquelle est situé le dispositif mobile comportent un noeud de positionnement du réseau cellulaire pour transmettre au serveur de positions, une information de position de la station de base correspondant à la cellule dans laquelle est situé le mobile. L'information de position de cellule de la station de base peut être un identifiant de la station de base ou une zone géographique obtenue par traitement de mesures de puissance en réception réalisées sur la station de base par un émetteur-récepteur de communication mobile placé à bord du dispositif mobile ou une zone géographique correspondant à la zone de couverture de la station de base.

D'autres particularités et avantages de l'invention apparaîtront clairement dans la suite de la description donnée à titre d'exemple purement illustratif et non limitatif, en référence aux dessins schématiques annexés qui représentent :
- figure 1 : un exemple de système de localisation d'un dispositif mobile, tel qu'un véhicule, par satellite ;
- figure 2 : Un exemple de méthode de détermination de la position d'un récepteur GNSS dans un dispositif mobile, selon l'invention ;
- figure 3 : un exemple de transmission des informations de position au serveur de positions 3 réalisée par une technique de communication en réseau cellulaire, selon l'invention ;

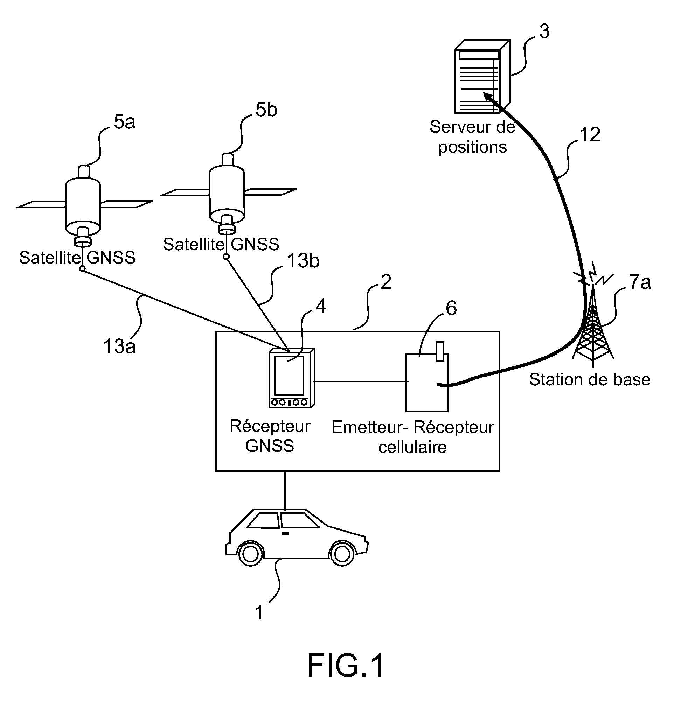

La figure 1 représente un exemple de système de localisation d'un dispositif mobile 1, par exemple un véhicule, par satellite. Le système de localisation comporte, à bord du véhicule 1, un dispositif de localisation et de diffusion 2 destiné à déterminer la position et/ou la vitesse du véhicule et à transmettre ces informations de localisation à un serveur de positions 3 chargé de les stoker et/ou de les exploiter. Le dispositif de localisation et de diffusion 2 comporte un récepteur 4 de signaux de navigation GNSS (en anglais: Global Navigation Satellite System) tels qu'un récepteur GPS (en anglais: Global Positioning System) ou Galileo, émis par une constellation de satellites 5a, 5b et un émetteur-récepteur 6 de communication mobile par réseau cellulaire, par exemple de type GSM (en anglais : Global System for Mobile communications), UMTS (en anglais : Universal Mobile Télécommunications System), ou CDMA (en anglais : Code Division Multiple Access). Les informations de position sont calculées par le récepteur GNSS 4 au moyen de l'exploitation de signaux 13a et 13b émis par les satellites 5a, 5b. Le nombre de satellites doit être au moins égal à quatre pour déterminer les quatre coordonnées de position du véhicule dans l'espace x ,y ,z et dans le temps t. Cette information de position est alors fournie à l'émetteur-récepteur 6 de communication mobile qui suivant un séquencement dépendant de l'application, le séquencement pouvant se limiter à suivre une périodicité prédéterminée, envoie ladite information de position au serveur de positions 3 à travers un canal de communication 12 et par l'intermédiaire d'une station de base 7a couvrant une zone de couverture, appelée aussi cellule, dans laquelle se trouve le dispositif mobile 1.

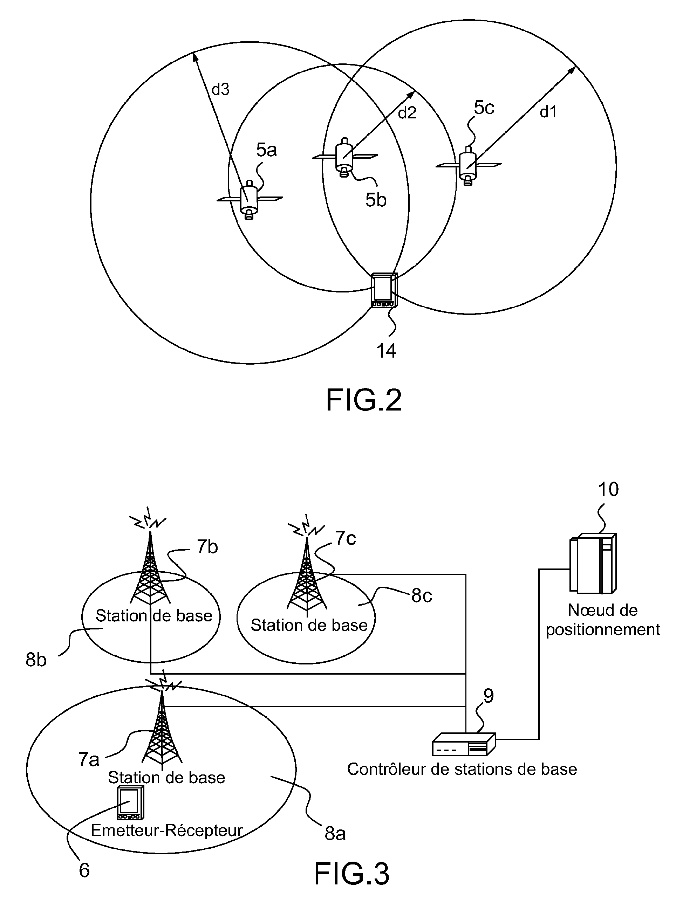

Un exemple de méthode de détermination de la position du récepteur GNSS 4 est représenté schématiquement sur la figure 2. La méthode consiste pour le récepteur 4 à déterminer les distances d1, d2, d3 le séparant d'au moins trois satellites 5a, 5b, 5c de la constellation puis à en déduire le point d'intersection 14 des sphères dont le centre est matérialisé par la position du satellite lui même et dont le rayon est fourni par les distances d1, d2, d3. La position du récepteur GNSS 4 correspond à ce point d'intersection 14. La mesure des distances d1, d2, d3 est réalisée dans le récepteur 4 par chronométrage du temps d'arrivée de signaux radio électriques constituant un message de navigation provenant des satellites 5a, 5b, 5c. Les informations essentielles provenant de chaque satellite via le message de navigation et que doit traiter le récepteur sont constituées par la date d'émission du message et la position du satellite au moment de l'émission du signal radio électrique. Le satellite transmet dans son message de navigation ses éphémérides (paramètres Kepleriens) permettant au récepteur 4 de calculer la position du satellite dans un référentiel lié à la Terre. Les éphémérides sont constituées dans le cas d'un signal GPS de 16 paramètres répétés toutes les 30 secondes dans le message de navigation.

La position du satellite étant obtenue, il reste au récepteur à détecter l'heure d'émission du message afin de déduire le temps de propagation du signal émis par le satellite et la distance le séparant du satellite, puis le rayon d'une des 4 sphères nécessaires, et la position du véhicule 1.

La méthode de transmission des informations de position au serveur de positions 3 est réalisée par une technique de communication en réseau cellulaire tel que représentée schématiquement sur la figure 3. Le réseau cellulaire de communication s'appuie sur un maillage géographique dont les mailles constituent des zones de couverture géographique 8a, 8b, 8c, appelées cellules. Les zones de couverture géographique 8a, 8b, 8c correspondent respectivement à des zones de couverture radio-électrique des stations de base 7a, 7b, 7c. Un émetteur-récepteur 6 de communication mobile peut communiquer avec le réseau cellulaire dès qu'il se trouve dans la zone de couverture radio-électrique de l'une des stations de base 7a, 7b, 7c et donc dès qu'il se trouve dans l'une des cellules 8a, 8b, 8c.

Chaque station de base est connectée à un contrôleur de stations de base 9, connu sous le nom de BSC (Base Station Controler) en GSM ou RNC (Radio Network Controler) en UMTS. Le contrôleur de station de base 9 a pour fonction d'aiguiller les communications de l'émetteur-récepteur 6 de communication mobile mais aussi d'analyser un ensemble de mesures radioélectriques reportées par l'émetteur-récepteur 6 de communication mobile afin de déterminer la zone géographique 8a, 8b, 8c dans laquelle se trouve l'émetteur-récepteur 6 et de lui affecter un canal de communication 12 avec la station de base 7a la plus appropriée, c'est à dire celle correspondant à la zone géographique dans laquelle se trouve le dispositif mobile 1. Les réseaux de communication cellulaires de type GSM et UMTS sont généralement équipés d'un noeud de positionnement 10, connus sous le nom de GMLC (Gateway Mobile Location Center) et chaque station de base 7a, 7b, 7c est identifiée de façon unique par un identifiant unique, appelé Cell Id dans un réseau cellulaire de type GSM. Le noeud de positionnement 10 est chargé, sur requête d'une application ou d'un équipement externe au réseau cellulaire, de délivrer soit l'identifiant de la station de base 7a à laquelle est connecté l'émetteur-récepteur cellulaire 6, soit directement une information de position du dispositif mobile 1 basée sur la zone géographique de couverture 8a de la station de base 7a. Un dispositif mobile 1 a parfaite connaissance de l'identifiant de la station de base à laquelle il est connecté.

Selon l'invention, le procédé consiste à transmettre au serveur de positions 3, l'information de position déterminée par le récepteur 4 de signaux de navigation GNSS et l'identifiant de la station de base à laquelle il est connecté et à vérifier, dans le serveur de positions 3, que l'information de position reçue est incluse dans la zone de couverture de la station de base correspondant à l'identifiant reçu. L'identifiant de la station de base peut être transmis de différentes façons au serveur de positions 3.

Selon un premier mode de réalisation de l'invention, le procédé consiste à exploiter des informations d'identifiant de cellule connues du dispositif mobile 1 de manière à valider l'information de position reportée par ce dispositif mobile. Pour cela, le procédé consiste à élaborer, dans le dispositif de localisation et de diffusion 2, un message contenant l'information de position et l'identifiant de la station de base à laquelle il est connecté, et à envoyer ce message vers le serveur de positions 3. A la réception du message, le serveur de position 3 vérifie que l'information de position reçue est incluse dans la zone de couverture de la station de base correspondant à l'identifiant joint au message envoyé. Si ce n'est pas le cas, alors une fraude ou un problème dans le dispositif est détecté. Optionnellement, le procédé peut comporter une étape supplémentaire consistant à valider l'identifiant transmis dans le message envoyé par le dispositif de localisation et de diffusion 2, cette étape consistant à vérifier, dans le serveur de positions 3, la cohérence entre la succession des différents identifiants reçus. Avantageusement, la succession d'informations de position du dispositif mobile 1 et la succession d'informations de position des cellules dans lesquelles se trouvent les stations de base transmises au serveur de positions 3 sont comparées.

Selon un deuxième mode de réalisation de l'invention, le procédé consiste à interroger le noeud de positionnement 10 du réseau cellulaire pour obtenir une information de position de la cellule dans laquelle se trouve la station de base à laquelle est connecté l'émetteur-récepteur 6 associé au récepteur 4 de signaux de navigation GNSS. Pour cela, le dispositif de localisation et de diffusion 2 envoie un message contenant l'information de position du dispositif mobile 1 déterminée par le récepteur 4 de signaux de navigation GNSS, à la réception de ce message, le serveur de position 3 interroge le noeud de positionnement 3 du réseau cellulaire pour obtenir une information de position de la cellule dans laquelle se trouve la station de base à laquelle est connecté l'émetteur-récepteur 6 associé au récepteur 4 de signaux de navigation GNSS. Le serveur de positions 3 vérifie ensuite que l'information de position reçue du dispositif de localisation et de diffusion 2 est incluse dans la zone de couverture de la station de base. Ce deuxième mode de réalisation de l'invention peut être utilisé également comme étape optionnelle supplémentaire au procédé selon le premier mode de réalisation.

L'information de position de la cellule peut être, l'identifiant de la station de base, ou une zone géographique obtenue par traitement de mesures de puissance en réception réalisées par l'émetteur-récepteur 6 sur au moins la station de base, ou une zone géographique correspondant à la zone de couverture de la station de base identifiée par son identifiant.

Bien que l'invention ait été décrite en liaison avec des modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Procédé d'authentification et de validation d'informations de position reportées par un dispositif mobile consistant à déterminer, à bord du dispositif mobile (1), la position du dispositif mobile (1) à partir de signaux de navigation GNSS émis par une constellation de satellites (5a, 5b, 5c) et à transmettre l'information de position obtenue vers un serveur de positions (3) par l'intermédiaire d'une station de base (7a, 7b, 7c) d'un réseau cellulaire de communication mobile, la station de base (7a, 7b, 7c) ayant une zone de couverture (8a, 8b, 8c), appelée cellule, dans laquelle est situé le dispositif mobile (1), **caractérisé en ce en ce qu**'il consiste en outre à transmettre au serveur de positions (3), une information de position de la cellule dans laquelle se trouve la station de base (7a, 7b, 7c) à laquelle est connecté le dispositif mobile (1), à vérifier, dans le serveur de positions (3), que la position du dispositif mobile (1) reçue est incluse dans la cellule de la station de base correspondant à l'information de position de cellule reçue et suivant le résultat de la vérification, à décider si la position déterminée par le dispositif mobile (1) à partir des signaux de navigation et transmise au serveur de positions est authentique ou s'il y a une fraude.

2. Procédé selon la revendication 1, **caractérisé en ce qu'**il consiste à transmettre au serveur de positions (3) une succession d'informations de position du dispositif mobile (1) et une succession d'informations de position des cellules dans lesquelles se trouvent les stations de base, à comparer la succession de positions du dispositif mobile (1) à la succession de positions des cellules et à décider si la succession de positions transmises par le dispositif mobile correspond à une trajectoire authentique suivie par le dispositif mobile.

3. Procédé selon l'une des revendications 1 ou 2, **caractérisé en ce que** l'information de position de cellule est un identifiant de la station de base (7a, 7b, 7c) transmis au serveur de positions (3) par le dispositif mobile (1) dans un message contenant l'information de position du dispositif mobile (1) et l'identifiant de la station de base (7a, 7b, 7c).

4. Procédé selon l'une des revendications 1 ou 2, **caractérisé en ce que** l'information de position de cellule de la station de base (7a, 7b, 7c) est transmise au serveur de positions (3) par un noeud de positionnement (10) du réseau cellulaire en réponse à une interrogation du serveur de position (3) après réception du message contenant l'information de position du dispositif mobile (1) transmise par le dispositif mobile (1).

5. Procédé selon la revendication 4, **caractérisé en ce que** l'information de position de cellule de la station de base (7a, 7b, 7c) est un identifiant de la station de base.

6. Procédé selon la revendication 4, **caractérisé en ce que** l'information de position de cellule de la station de base (7a, 7b, 7c) est une zone géographique obtenue par traitement de mesures de puissance en réception par un émetteur-récepteur (6) de communication mobile placé à bord du dispositif mobile (1).

7. Procédé selon la revendication 4, **caractérisé en ce que** l'information de position de cellule de la station de base (7a, 7b, 7c) est une zone géographique correspondant à la zone de couverture de la station de base.

8. Système d'authentification et de validation d'informations de position reportées par un dispositif mobile, comportant :
- à bord du dispositif mobile (1), un dispositif de localisation et de diffusion (2) pour élaborer et envoyer un message contenant une information de position du dispositif mobile (1),
- un réseau de communication cellulaire comportant au moins une station de base (7a, 7b, 7c) ayant une zone géographique de couverture (8a, 8b, 8c), appelée cellule pour transmettre le message contenant l'information de position du dispositif mobile (1),
- un serveur de positions (3) connecté au réseau cellulaire pour recevoir et traiter le message contenant l'information de position du dispositif mobile (1),
**caractérisé en ce que** le réseau de communication cellulaire comporte en outre des moyens de localisation de la cellule (8a, 8b, 8c) de la station de base (7a, 7b, 7c) dans laquelle est situé le dispositif mobile (1) pour délivrer et transmettre une information de position de ladite cellule au serveur de positions (3) et **en ce que** le serveur de positions (3) comporte des moyens de vérification pour vérifier que la position du dispositif mobile (1) reçue est incluse dans la cellule de la station de base correspondant à l'information de position de cellule reçue et suivant le résultat de la vérification, pour décider si la position déterminée par le dispositif mobile (1) à partir des signaux de navigation et transmise au serveur de positions est authentique ou s'il y a une fraude.

9. Système selon la revendication 8, **caractérisé en ce que** le dispositif de localisation et de diffusion (2) comporte un récepteur (4) de signaux de navigation GNSS pour déterminer la position du dispositif mobile (1) à partir de signaux de navigation émis par une constellation de satellites, connecté à un émetteur-récepteur (6) de communication cellulaire pour envoyer le message contenant la position du dispositif mobile (1) au serveur de positions (3).

10. Système selon l'une des revendications 8 ou 9, **caractérisé en ce que** les moyens de localisation de la cellule (8a, 8b, 8c) de la station de base (7a, 7b, 7c) dans laquelle est situé le dispositif mobile (1) comportent un identifiant de la station de base transmis au serveur de positions par l'émetteur-récepteur (6) de communication cellulaire avec le message contenant l'information de position du dispositif mobile (1).

11. Système selon l'une des revendications 8 ou 9, **caractérisé en ce que** les moyens de localisation de la cellule (8a, 8b, 8c) de la station de base (7a, 7b, 7c) dans laquelle est situé le dispositif mobile (1) comportent un noeud de positionnement (10) du réseau cellulaire pour transmettre au serveur de positions (3), une information de position de la station de base correspondant à la cellule dans laquelle est situé le dispositif mobile (1).

12. Système selon la revendication 11, **caractérisé en ce que** l'information de position de cellule de la station de base (7a, 7b, 7c) est un identifiant de la station de base.

13. Système selon la revendication 11, **caractérisé en ce que** l'information de position de cellule de la station de base (7a, 7b, 7c) est une zone géographique obtenue par traitement de mesures de puissance en réception par l'émetteur-récepteur (6) de communication mobile.

14. Système selon la revendication 11, **caractérisé en ce que** l'information de position de cellule de la station de base (7a, 7b, 7c) est une zone géographique correspondant à la zone de couverture de la station de base.
